# EUROPEAN PATENT SPECIFICATION

(11) **EP 3 606 393 B1**
(45) Date of publication and mention of the grant of the patent: **04.05.2022**
(21) Application number: 18721852.4
(22) Date of filing: 03.04.2018
(51) Int. Cl.: A47L 11/40, A47L 11/03, A47L 11/10, A47L 11/24

(54) **FLOOR CLEANING MACHINE**
BODENREINIGUNGSMASCHINE
MACHINE DE NETTOYAGE DU SOL

(30) Priority: 03.04.2017 IT 201700036518
(43) Date of publication of application: 12.02.2020
(73) Proprietor: E' COSI' S.R.L., 47122 Forli' (IT)
(72) Inventor: FORNASARI, Simone, 47122 Forli' (IT); SANDRI, Chiara, 47122 Forli' (IT)
(74) Representative: Minghetti, Mauro
(86) International application number: PCT/IB2018/052277
(87) International publication number: WO 2018/185645

(56) References cited:
- WO-A1-2005/025758
- WO-A1-2005/077244
- WO-A2-01/82766
- US-A1- 2015 128 996
- US-A1- 2015 182 088

## Description

### TECHNICAL FIELD OF THE INVENTION

The present invention concerns a floor cleaning machine.

More specifically, the present invention concerns a floor cleaning machine for large environments such as offices, warehouses, public places and the like.

### PRIOR ART

The floors of large environments are currently cleaned with machinery which is generically referred to as washer-dryers.

A washer-dryer is a machine that can be handled by an operator or can be of a self-driven type with an on-board operator.

The washer-dryer machine usually comprises a front washing unit and a rear drying unit.

The machine cleans floors through the mechanical polishing action of one or more rotating brushes, and the emulsifying action of a water-detergent solution.

The machine is usually equipped with a tank which is filled with a detergent liquid, normally comprising water and a solution with a percentage of detergent product which varies depending on the type of dirt and product used.

The machine moves while simultaneously releasing the detergent liquid on the floor from the brushes, which use a mechanical rotating action to remove the deposited dirt.

At the same time the rear part of the machine has a floor wiping unit which serves to collect the residual washing materials by means of an aspiration system which directs them to a suitable recovery tank, separate from the tank filled with clean water.

To clean floors of large environments, in addition to the washer-dryer, sweeping machines are also used which remove dirt and large impurities from the floor.

The operation of the sweeping machines is rather similar to that of the washer-dryers: in fact, these types of machines also comprise brushes or rollers that collect dirt and impurities from the floor and direct them toward an aspiration inlet, which, in turn, conveys everything toward a suitable collection container.

Although widely used, the washer-dryer machines described above are not however free from drawbacks.

Firstly, machines of this type continually produce considerable quantities of waste liquid from the aspiration carried out by said aspiration means.

These liquids clearly contain dirt and impurities collected from the floor as well as considerable quantities of surfactants, which must be disposed of in a proper manner to avoid damaging the environment: this entails a considerable cost for the cleaning service provider.

Moreover, and as previously mentioned, this type of washer-dryer machine always requires at least one operator who must lead the machine toward the floor areas to be cleaned, or - in the most advanced versions - who controls the machine while sitting in a suitable seat.

This can also bring considerable costs, especially when the environments to be cleaned are particularly large.

In fact, it is estimated that the greatest cost in the management of cleaning of an environment using this type of machinery is indeed constituted by the human personnel, i.e. operators who operate the machines.

WO 01/82766 A2 discloses a cleaning robot, remotely controlled or autonomous. In one embodiment, a feed roller lets out a roll of webbing or toweling, a take-up roller reels in the toweling, and a motor system causes transfer of the toweling between the feed roller and the take-up roller.

A housing holds the motor system and the rollers, which are mounted in the housing such that the motor causes transfer of the webbing between the rollers.

One of the rollers is configured to rest on the floor or surface so as to cause the toweling to clean the surface.

In an alternative embodiment, the assembly also includes a pad to press the toweling against the surface, where the pad is mounted in the housing such that the motor causes transfer of the toweling between the rollers and between the pad and the surface.

### OBJECTS OF THE INVENTION

The technical aim of the present invention is to improve the state of the art in the field of floor cleaning machinery.

Within such technical aim, an object of the present invention is to provide a floor cleaning machine that makes it possible to limit or eliminate the production of liquids containing surfactants or other substances to be disposed of to avoid dispersing them in the environment.

Another object of the present invention is to provide a floor cleaning machine which makes it possible to reduce the continuous presence of the human operator.

Yet another object of the present invention is to provide a floor cleaning machine which makes it possible to reduce the number of machines required to treat a particular environment.

This aim and these objects are all achieved by a floor cleaning machine according to the attached claim 1.

The machine comprises floor locomotion means, at least one processing and control unit operatively interlocked with the locomotion means, and at least one operator group suitable to carry out a washing and/or cleaning and/or similar treatment on the floor itself.

According to the invention, the machine's operator group comprises at least one cleaning member in the form of a band wound around a first reel, winding means of the cleaning member, unwound from the first reel in a second reel, and an operating head suitable to hold a portion of the cleaning member, interposed between the first reel and the second reel, in contact with the floor.

Thanks to this solution, the floor is treated without the direct dispensing of detergent liquid, but only by means of a scrubbing action exerted by the cleaning member. According to another aspect of the invention, and according to some specific floor treatment modes, the operator group comprises dispensing means of a predetermined quantity of a treatment liquid on the cleaning member.

Such liquid is suitable to carry out, for example, a washing and/or disinfection/sanitising and/or waxing treatment and/or the like on the floor.

In this case, then, the cleaning member is impregnated with the treatment liquid directly on the machine.

In other possible operation modes of the machine according to the invention, the cleaning member can comprise a cloth which is previously impregnated with a treatment liquid.

For example, the treatment liquid can be a solution of water and surfactants and/or disinfectant/sanitising products and/or of another type.

According to yet another aspect of the invention, the machine has a modular structure.

In more detail, the machine is equipped with a main module that comprises at least the locomotion means and the processing and control unit, and at least one functional module which comprises at least a part of the operator group; this functional module is separable from the main module and possibly interchangeable with other functional modules.

The machine can be equipped with as many functional modules as the number of different possible treatments to be carried out on the floor.

In a certain moment, one or more modules are in an operative treatment position on the floor, while others are in an inoperative position, for example stored in other parts of the machine and in any case ready for use in replacement of the other. Dependent claims refer to preferred and advantageous embodiments of the invention.

### BRIEF DESCRIPTION OF THE DRAWINGS

Further characteristics and advantages of the present invention will be clarified in the detailed description of some preferred, but not exclusive, embodiments of a floor cleaning machine, illustrated only by way of non-limiting example in the accompanying drawings wherein:
Figure 1 is a schematic side view of the machine according to the invention;
Figure 2 is a schematic side view of another possible embodiment of the machine according to the invention;
Figure 2A is a schematic side view of yet another possible embodiment of the machine according to the invention;
Figure 3 is a schematic axonometric view of the machine according to the embodiment of figure 1;
Figure 4 is a schematic axonometric view of the machine of figure 3, with some parts removed for greater clarity;
Figure 5 is a detailed axonometric view of the machine's operator group;
Figure 6 is a top view of the machine of figures 3-5, in a partially disassembled configuration;
Figure 7 is a detailed front and partially sectioned view of the machine's operator group;
Figure 7A is a detailed front and partially sectioned view of the machine's operator group according to another embodiment of the invention;
Figure 8 is a schematic axonometric view of another embodiment of the machine according to the invention;
Figure 9 is a schematic axonometric view of the machine of figure 8, with some parts removed for greater clarity;
Figure 10 is a schematic axonometric view of the machine of figures 8,9, in a partially disassembled configuration;
Figure 11 is a schematic axonometric view of the machine of figures 8-10 from a different angle, in a partially disassembled configuration;
Figure 12 is a schematic axonometric view of another embodiment of the machine according to the invention;
Figure 13 is a schematic axonometric view of the machine of figure 12 from a different angle;
Figure 14 is a schematic axonometric view of the machine of figures 12,13, with the functional modules removed for greater clarity;
Figure 15 is a detailed axonometric view of the machine of figures 12-14 from below;
Figure 16 is a detailed axonometric view of the machine of figures 12-14 from below, in a different operative configuration;
Figure 17 is a schematic axonometric view of another embodiment of the machine according to the invention;
Figure 18 is a schematic axonometric view of the machine of figure 17, from a different angle and with some parts removed for greater clarity;
Figure 19 is a schematic axonometric view of the machine of figures 17,18, with the functional modules removed for greater clarity;
Figure 20 is a detailed axonometric view of the machine of figures 17-19 from below;
Figure 21 is a detailed axonometric view of the machine of figures 17-19 from below, in a different operative configuration;
Figure 22 is a schematic axonometric view of another embodiment of the machine according to the invention, with some parts removed for greater clarity;
Figure 23 is a schematic axonometric view of the machine of figure 22 from a different angle.

### EMBODIMENTS OF THE INVENTION

With reference to the annexed figures, the reference number 1 generally indicates a floor cleaning machine according to the present invention.

The machine 1 according to the present invention can be used for cleaning and treating environments of various types and sizes.

The features of machine 1 make it particularly advantageous in the treatment of large environments.

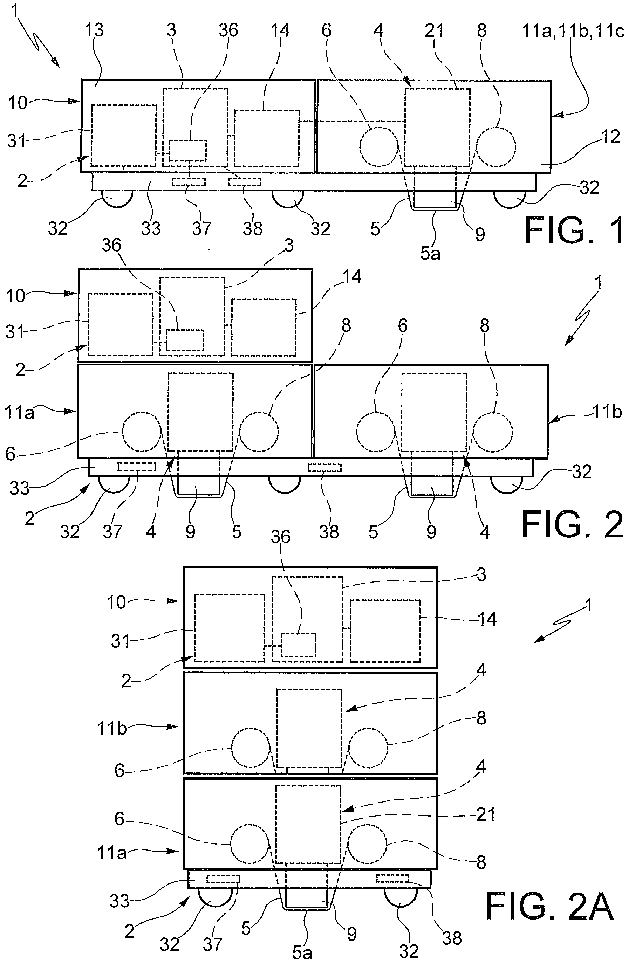

Machine 1 can best be understood by referring to the schematic side views of figures 1,2,2A wherein its main features are depicted in three respective different possible embodiments.

Machine 1 comprises locomotion means, indicated as a whole with number 2, for its movement over the floor P to be cleaned.

In particular, locomotion means 2 allow machine 1 to move in any direction, as well as to rapidly change direction.

Moreover, machine 1 comprises a processing and control unit 3.

As better described hereinafter, processing and control unit 3 manages the operation of the entire machine 1.

Processing and control unit 3 is operatively interlocked with locomotion means 2 of machine 1, in such a way that it can move in a controlled and/or programmed a priori manner.

Machine 1 also comprises at least one operator group 4; operator group 4 is adapted to carry out a washing and/or cleaning and/or similar treatment on floor P itself.

Unless otherwise specified, in this description the terms washing and/or cleaning are generically, and in a non-limiting way, intended as a series of possible different operations to be carried out on the surface of floor P, also with different objectives. More specifically, different means can be employed, and/or specific products can be used to achieve certain results.

According to one aspect of the invention, operator group 4 comprises at least one cleaning member 5.

Cleaning member 5 is in the form of a band, wound around a first reel 6. Moreover, operator group 4 comprises winding means 7 of cleaning member 5. In more detail, operator group 4 comprises winding means 7 of cleaning member 5, unwound from the first reel 6, in a second reel 8.

Operator group 4 also comprises an operating head 9.

Operating head 9 is suitable to hold a portion 5a of cleaning member 5, interposed between first reel 6 and second reel 8, in direct contact with floor P.

Operating head 9 holds portion 5a in contact with floor P by exerting a certain amount of pressure which can vary, for example, in relation to the different types of floor P itself.

In this way, cleaning member 5 can exert a specific-intensity scrubbing action on floor P.

This action can be obtained, for example, by moving/translating the entire machine 1; alternatively, operator group 4 can be associated with translation means, which are suitable to provide alternate motion, with respect to the machine, with suitable speed and excursion, that indeed translates into a scrubbing action of cleaning member 5 on floor P.

As explained hereinafter, such scrubbing action can be performed to carry out various types of treatments.

According to another aspect of the invention, machine 1 comprises a main module 10, which comprises/houses at least the locomotion means 2 and the processing and control unit 3.

Moreover, machine 1 comprises at least one functional module 11a,11b,11c, which houses at least a part of operator group 4, or houses the entire operator group 4. Said functional module 11a,11b,11c can be separated from main module 10. Functional module 11a,11b,11c can have different features in relation to the specific operation to be performed; moreover, functional module 11a,11b,11c can be interchanged with the other functional modules 11a,11b,1c.

More specifically, functional module 11a,11b,11c comprises a respective support 12, which houses at least the first reel 6, second reel 8 and operating head 9.

Main module 10 instead comprises a respective box-like structure 13.

Box-like structure 13 houses at least the locomotion means 2 and the processing and control unit 3; furthermore, the same box-like structure 13 can also house the winding means 7 of second reel 8.

Moreover, main module 10 can also comprise a control unit 14 of operator group 4; the control unit can be housed inside box-like structure 13.

Such control unit 14 can have features specifically developed for carrying out certain operations.

Thanks to these measures, functional module 11a,11b,11c is constructively simple and light, as the entire operation and control part is transferred to main module 10: in particular and as stated, both winding means 7 of cleaning member 5 and control unit 14 of operator group 4 are housed in main module 10.

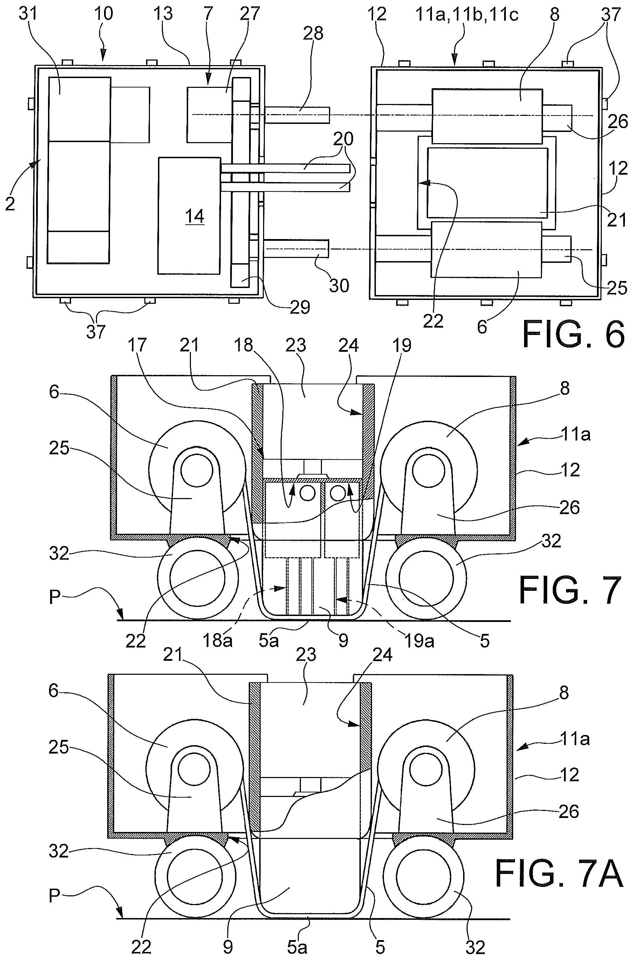

Support 12 of functional module 11a,11b,11c and box-like structure 13 of main module 10, as schematically shown in figure 6, can be mutually coupled and separated by a removable type of connecting means.

Such connecting means can be of a type which allows the mutual hooking/unhooking of the two parts in a simple and fast way; for example, such means can be of an interlocking type, or the like.

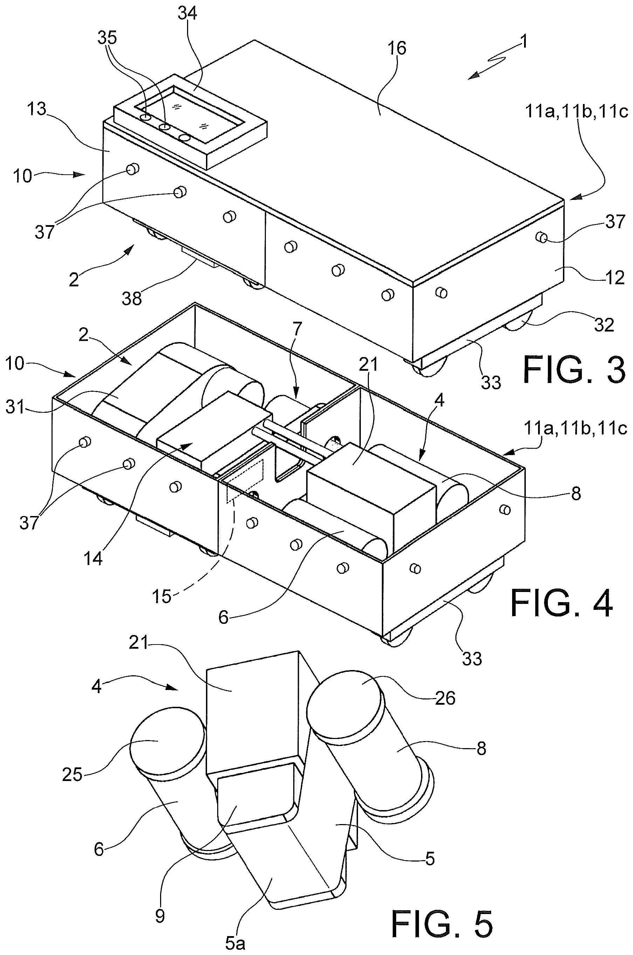

There can be electrical/electronic connections 15 for the power supply and control of functional module 11a,11b,11c at the coupling surfaces between the two parts. As schematically shown in figure 3, machine 1 can be provided with an upper cover 16 which closes above main module 10 and/or functional module 11a,11b,11c. According to one embodiment of the invention, cover 16 can have a rechargeable battery housed within it that powers the entire machine 1, and which ensures full autonomy for a certain number of operating cycles.

The rechargeable battery can be, for example, of a gel type or other suitable type and compatible with the overall dimensions requirements.

The rechargeable battery can also be housed in other parts of machine 1, for example inside box-like structure 13 of main module 10.

Locomotion means 2 can be associated only with main module 10, or also with functional module 1 1a,11b,11c, if this is necessary to ensure the stability of machine 1 during movement.

Figure 1 as well as figures 3-7A show a possible embodiment of the machine in which main module 10 and functional module 11a,11b,11c are connected so as to be arranged side by side.

In this way they are arranged in a horizontal position, in use, or in any case parallel to the plane of floor P.

This configuration of the machine can be particularly advantageous in situations where the machine's vertical dimensions must be reduced: this characteristic is very important in cases wherein it is necessary to carry out cleaning operations of floor P in narrow spaces, such as for example under furniture, beds or other structures that cannot be moved.

For this same reason, main module 10 and functional module 11a,11b,11c can be made in shapes, for example substantially parallelepiped shapes where - with reference to the usage configuration - the height is considerably smaller than the length and width.

Only by way of non limiting example, main module 10 and/or functional module 11a,11b,11c could be made with dimensions of about 40-60 cm in length and width, and approximately 20 cm in height.

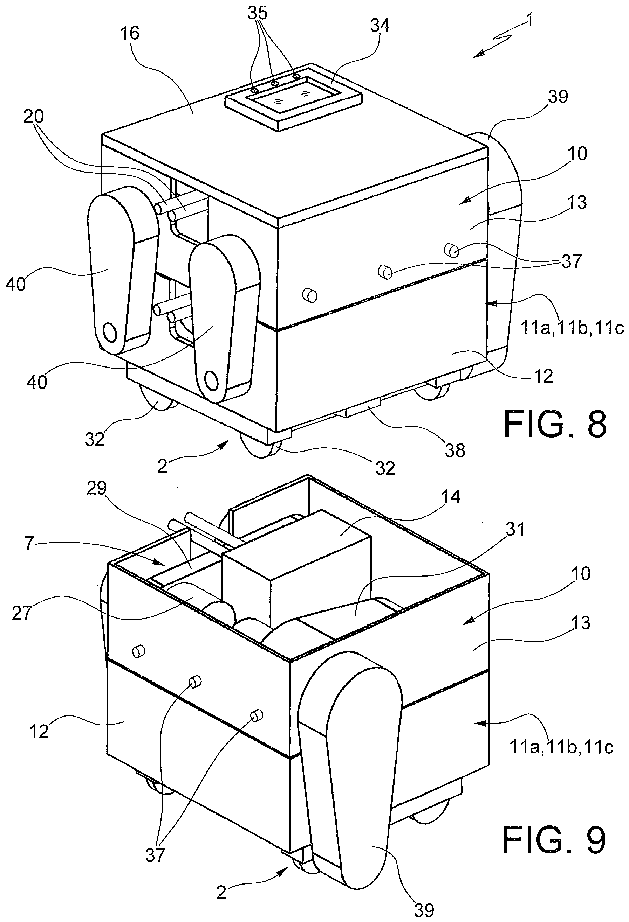

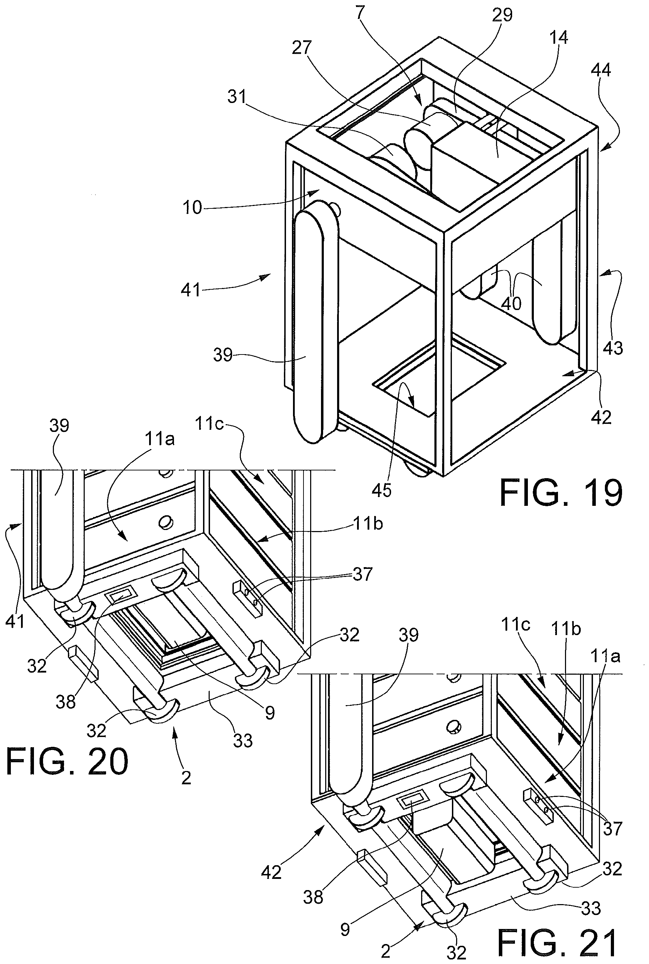

Figures 2,2A - as well as subsequent figures 8-21 - instead schematically show other possible configurations of machine 1, in which main module 10 and functional module 11a,11b,11c (or multiple functional modules 11a,11b,11c, if present) are arranged one above the other vertically, in use.

In more detail, the configuration schematically shown in figure 2 constitutes a compromise of the various needs to limit the machine's vertical dimensions and to have two functional modules 11a,11b,11c arranged side by side, of which at least one operating on floor P, or both simultaneously operating on floor P.

The configuration of figure 2A and of the subsequent figures 8-21 - as better described hereinafter - instead makes it possible to limit the overall dimensions of machine 1 as much as possible, thereby optimising its possible movements in the environment to be treated; at the same time, this same configuration makes it possible to equip the machine with multiple interchangeable functional modules 11a,11b,11c which are immediately usable when necessary.

According to another aspect of the invention, cleaning member 5 can be made of a flexible material such as a natural or synthetic fabric, or a non-woven fabric or the like.

Cleaning member 5 can be used dry, or also in combination with a certain treatment liquid.

A typical application of dry use can be that of sweeping or collecting rubbish or dirt of a larger size.

In this case, cleaning member 5 can be constituted by a dust-capturing cloth, such as for example an electrostatic cloth or the like.

On the contrary, if cleaning member 5 is used in combination with a treatment liquid, according to yet another aspect of the invention, operator group 4 comprises dispensing means 17 of a predetermined amount of a treatment liquid on the same cleaning member 5.

In the latter case, cleaning member 5 can be made of a material suitable to be impregnated with the treatment liquid, such as to transfer the liquid to floor P according to the desired quantities and mode.

Said treatment liquid can be of the type adapted to carry out a washing and/or disinfection/sanitising and/or waxing treatment and/or the like on floor P.

The treatment liquid can therefore be a detergent, a disinfectant, a wax for floors and many others.

By way of non-limiting example, figure 7 schematically shows functional module 11a specifically intended for washing floor P, and precisely comprising dispensing means 17 of a washing liquid.

The washing liquid can be a solution of water and detergent.

In more detail, in this case dispensing means 17 can comprise a first tank 18 for dispensing water, and a second tank 19 for dispensing a detergent, or even a disinfecting product or the like.

Dispensing can occur, for example, by means of respective channels 18a,19a, or gaps.

First tank 18 and second tank 19 can be made within operating head 9, in so far as the latter is always in contact with cleaning member 5.

Alternatively, the machine can be equipped with a single supply tank in which the water and detergent/disinfectant are already mixed in suitable quantities.

In the case where functional module 11a is intended for a different function, for example waxing floor P, operating head 9 can be equipped with a single tank containing, precisely, the wax for floors or another type of liquid, without any limitations.

In one embodiment of the invention, the tank (or tanks) containing the treatment liquid (or liquids) can be housed in other parts of support 12 of functional module 11a, i.e. not necessarily within operating head 9.

Control unit 14 of operator group 4 can comprise at least a part of dispensing means 17 of the treatment liquid, if provided.

Alternatively, said dispensing means 17 can be completely housed inside functional module 11a, such to guarantee easier interchangeable conditions of functional modules 11a,11b,11c themselves.

In the case in which control unit 14 of operator group 4 comprises at least a part of dispensing means 17 of a treatment liquid (for example also the tank that contains it), pipes 20 can be provided, which put the two parts respectively belonging to main module 10 and functional module 11a in communication.

Operating head 9 can be associated with a respective counterhead 21, integral with support 12.

In more detail, operating head 9 can be associated with counterhead 21 so as to be movable (e.g., sliding) between an inoperative upper position and an operative lower position, in which it is located in the proximity of floor P (position shown in figure 7).

In order to allow the removal of operating head 9 from the inoperative position to the operative position, the bottom of the support is provided with an opening 22; opening 22 is sufficiently larger than operating head 9 so as to allow the removal of cleaning member 5.

In the inoperative position, operating head 9 can be raised in relation to the plane of floor P in order to carry out maintenance operations, such as for example the replacement of cleaning member 5, or others.

For this purpose, operating head 9 can be associated to a respective actuator 23; actuator 23 can be for example of a linear type, integral with counterhead 21. Counterhead 21 can then be equipped with a central cavity 24 which houses actuator 23 and operating head 9 associated therewith.

Operating head 9 can also be heated (for example by means of electrical resistors) in order to render certain operations easier or more effective.

Support 12 of functional module 11a comprises a first reel holder 25 and a second reel holder 26 to respectively support first reel 6 and second reel 8, with parallel axes.

As especially shown in figures 4 and 6, winding means 7 can comprise a winding motor 27, having a respective output axis 28 which is coaxial with second reel holder 26, in use.

Output axis 28 can be selectively coupled to second reel holder 26 or uncoupled from the same, so as to constrain/release functional module 11a from main module 10.

Winding motor 27 can also be associated with motion transmission means 29 to a second axis 30, parallel to said output axis 28, and coaxial to first reel holder 25. Second axis 30 can be selectively coupled/uncoupled to/from first reel holder 25, so as to constrain/release functional module 11a to/from main module 10. Therefore, first reel holder 25 can be directly dragged in rotation by the same winding motor 27 to unwind cleaning member 5; alternatively, first reel holder 25 can also be made idle so that the unwinding of cleaning member 5 from first reel holder 25 occurs as a result of the simultaneous winding of second reel holder 26. According to another possible alternative, first reel holder 25 can be associated with a respective, and additional, unwinding motor of cleaning member 5, operated independently from winding motor 27.

The latter solution can allow, in use - for example by controlling the unwinding motor so as to exert torque in the opposite direction to that of winding motor 27 - to impart a certain stretching to cleaning member 5 so that it is maintained in the correct position during the movements of machine 1 and/or during the scrubbing action on floor P.

Locomotion means 2 can comprise, for example, a drive unit 31, fixed to box-like structure 13 and mechanically associated with wheels 32 for moving on floor P. Drive unit 31 can comprise, for example, an electric gear motor unit, or a rotary actuator of another type.

Locomotion means 2 can comprise a carriage base 33, associated below box-like structure 13 of main module 10, having a number of wheels 32, some of which can be steering wheels (possibly equipped with respective actuators in order to obtain the steering action).

Wheels 32 can also be, for example, of a spherical type.

Carriage base 33 can also have a footprint which is larger than that of main module 10, for stability purposes during movements over floor P.

As shown in figure 3, machine 1 can be equipped with a control interface 34; control interface 34 allows the operator to program and manage the operation of machine 1 in its various phases.

Control interface 34 can be fixed, for example, to cover 16 of machine 1. Command interface 34 can be equipped with quick-start buttons 35 of the respective and distinct operating phases.

For example, it can be equipped with quick-start button 35 only for washing, or only for sweeping, or also for mixed operations, for example washing and sweeping, also carried out simultaneously.

The latter option can be used, for example, in the configuration of the machine schematically shown in figure 2, in which there are two functional modules 11a, 11b arranged side by side and positioned directly near floor P, for example one for washing and the other for sweeping.

In an alternative version of machine 1 according to the invention, two operator groups 4 adapted to respectively perform the washing and sweeping operations can be provided in a single functional module designed precisely to carry out the two operations simultaneously.

As an alternative to cleaning member 5 on which a treatment liquid (for example water and detergent, or a disinfectant, or wax for floors or others) is dispensed within machine, other embodiments of the invention can instead be equipped with cleaning member 5 comprising - or constituted by - a cloth previously impregnated with said treatment liquid.

In the latter case, therefore, means for dispensing the treatment liquid are not necessary.

Figure 7A shows, in detail, functional module 11a,11b,11c which uses cleaning member 5 operating in a dry state, or previously impregnated with a treatment liquid.

In this case, as mentioned, operator group 4 has no means for dispensing treatment liquid because cleaning member 5 is installed in functional module 11a,11b,11c, which is ready for use on floor P.

Functional module 11a,11b,11c shown in figure 7A could therefore be a washing functional module 11a that uses a cloth previously impregnated with detergent liquid, or can be a sweeping functional module 11b that uses a dust-capturing cloth, or can be a waxing functional module 11c which uses a cloth previously impregnated with wax for floors.

According to another aspect of the invention, processing and control unit 3 of machine 1 comprises automatic driving means 36.

Automatic driving means 36 are operatively interlocked with and connected to locomotion means 2.

Automatic driving means 36 are designed to allow machine 1 to autonomously move throughout the environment to be cleaned, for example following a given predetermined path.

More specifically, said automatic driving means 36 can comprise means for reading a map of the environment to be cleaned/treated, and means for generating a path within the same environment.

In one embodiment of the invention of particular practical interest, the aforementioned map of the environment to be cleaned/treated can be provided in the form of a graphic file (for example .dwg, dxf, or the like).

Such graphic file can be loaded into the internal memory of processing and control unit 3 of machine 1.

Thanks to this solution, automatic driving means 36 are able to analyse the characteristics of the environment to be cleaned and automatically generate a path of movement of machine 1 inside the same environment.

The generated path can be optimised for the overall distance travelled or for the total operating time; in some situations, the path can be specifically defined to meet certain specific requirements, for example to clean certain areas with greater care than others.

Automatic driving means 36 can further comprise a plurality of proximity sensors 37 for the detection of obstacles in the environment to be cleaned.

Proximity sensors 37 can be distributed along the sides of main module 10, or along the sides of functional module 11a,11b,11c.

In practical operation, while machine 1 autonomously moves through the environment to be cleaned according to a given path, proximity sensors 37 allow machine 1 to avoid hitting any obstacles, possibly generating an alternative path where possible.

Automatic driving means 36 can also comprise means for connection to a remote control unit that manages the movements of machine 1 within the environment to be treated.

Such connection means can also be associated with a localisation system of machine 1 inside the environment, so that said remote control unit will always be aware of the position of machine 1.

According to yet another aspect of the invention, machine 1 comprises at least one sensor 38 to detect the characteristics of floor P to be cleaned.

Detection sensor 38 is operatively interlocked with processing and control unit 3 of machine 1.

Detection sensor 38 allows machine 1 to entirely autonomously acquire the necessary information regarding the surface characteristics of floor P, for example its roughness and unevenness.

This information allows processing and control unit 3 to precisely adjust certain operating parameters of machine 1.

For example, in the case where dispensing means 17 of a treatment liquid on cleaning member 5 are present, processing and control unit 3 can determine the exact amount of liquid to be dispensed, precisely in relation to the surface characteristics of floor P.

Otherwise, processing and control unit 3 can determine how long machine 1 must remain in a given portion of the surface of floor P in order to effectively clean it in relation to those characteristics: in fact, a rougher floor certainly requires a longer scrubbing action.

Furthermore, processing and control unit 3 can determine how much force (or specific pressure) must be imparted to operating head 9 when the latter in turn presses on cleaning member 5 in contact with floor P.

As can be understood, this measure 1 makes it possible, on the one hand, to determine the optimum operating parameters for the effective cleaning of a certain type of floor P.

Furthermore, this measure makes it possible to reduce wasting materials, especially when the dispensing of a treatment liquid on cleaning member 5 is provided: in doing so it is in fact possible, for example, to prevent dispensing an excessive amount of liquid to clean floor P which requires, for its nature, minimum quantities of cleaning/treating products.

In use, operating head 9 is brought into the operating position, in which it presses cleaning member 5 into contact with floor P.

In this condition, cleaning member 5 can exert a more or less vigorous scrubbing action on floor P, for example following the same movement of machine 1, or by means of an alternate translational motion imparted to the same operating head 9. If provided, dispensing means 17 can be activated to impregnate cleaning member 5 with a treatment liquid, for example water and detergent.

Moreover, according to an important aspect of this invention, in certain moments of washing/cleaning operations, winding means 7 are activated so as to wind portion 5a of cleaning member 5 already used on floor P around second reel 8.

In this situation, at least winding motor 27 of second reel holder 26 is therefore activated, while first reel holder 25 can either be idle or be driven by a respective unwinding motor, if present.

Therefore, as a given portion 5a of cleaning member 5 is used, it is progressively wound around second reel 8 until the end of first reel 6 (which instead has cleaning member 5 which must still be used wound around it).

Once the end of first reel 6 has been reached, cleaning member 5 is completely wound around second reel 8; cleaning member 5 can then be, for example, washed in order to be reused, or can be recovered in another way if possible, or it can be removed/disposed of in the most appropriate manner.

As can be understood, especially in the case of the conventional washing operation of floor P, but not only, considerable savings can be obtained, especially in terms of products used (mainly water and detergents/disinfectants), with consequent lower environmental impact.

Furthermore, as explained above, machine 1 (if having sufficient knowledge of the characteristics of the environment to be cleaned) is able - thanks to automatic driving means 36 - to autonomously move along a given path, reaching the desired areas and staying there for extra time when necessary.

This makes it possible to considerably reduce the need for a present operator, as he/she must only intervene in situations in which machine 1 is blocked, if any, or to carry out maintenance operations (for example replacing cleaning member 5). It is therefore clear that the same operator, given the reduced need for intervention, can manage multiple machines 1 which operate at the same time in the same environment (for example a very large one).

Figures 8-11 show another embodiment of machine 1 according to the invention. This embodiment differs from that of figures 1 and 3-7A in that functional module 11a,11b,11c and main module 10 are overlapped: this makes it possible to obtain a minimum overall footprint of machine 1.

In more detail, functional module 11a,11b,11c is located directly near floor P, while main module 10 is positioned above functional module 11a,11b,11c; in other words, box-like structure 13 of main module 10 is superimposed on support 12 of functional module 11a,11b,11c.

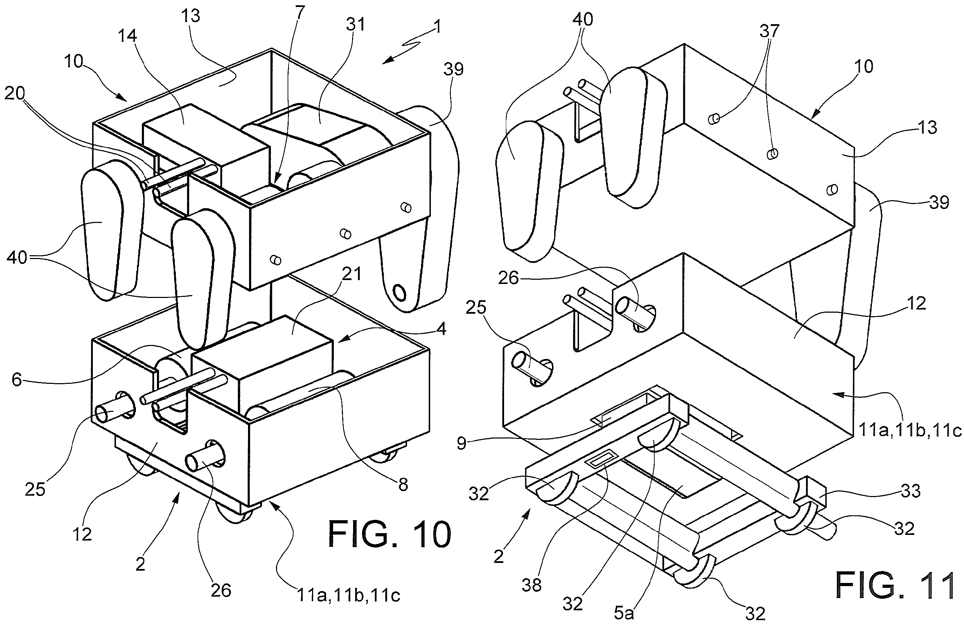

In this embodiment, locomotion means 2 comprise drive unit 31 and a carriage base 33 with wheels 32: carriage base 33 - as it cannot be associated with overlying functional module 10 - is removably fixed beneath support 12 of functional module 11a,11b,11c (as shown for example in figure 11).

In addition, locomotion means 2 comprise first transmission members 39, which serve to transmit motion from drive unit 31 to wheels 32 of carriage base 33.

First transmission members 39 can be located outside of box-like structure 13 and support 12 in order to facilitate the coupling/uncoupling of main module 10 and functional module 11a.

First transmission members 39 could be, for example, of the type with gears, belt, chain or of any other suitable type.

The mechanical connection between first transmission members 39 and carriage base 33 can be of the quick-coupling type to facilitate the replacement, if any, of functional module 11a.

Winding means 7 comprise second transmission members 40 for transmitting motion at least from winding motor 27 to second reel holder 26.

Second transmission members 40 can also be located outside of box-like structure 13 and support 12, again in order to facilitate the coupling/uncoupling of main module 10 and functional module 11a.

Second transmission members 39 could also be, for example, of the type with gears, a belt, a chain or of any other suitable type.

In the case wherein winding means 7 comprise, besides winding motor 27 coupled to second reel holder 26, also a further unwinding motor coupled to first reel holder 25, they can be correspondingly provided with respective - and separate - second transmission members 40 independent between them, so as to operate the two said motors according to the most suitable mode for the specific operational phase.

In the case wherein control unit 14 of operator group 4 comprises at least a part of dispensing means 17 of a treatment liquid, pipes 20 can be provided, which put the two parts respectively belonging to main module 10 and functional module 11a in communication.

As mentioned, this embodiment of the invention is characterised, if compared with the previous one, for the very reduced overall footprint size of machine 1, which allows for much easier movement along the path to be followed for cleaning a certain environment.

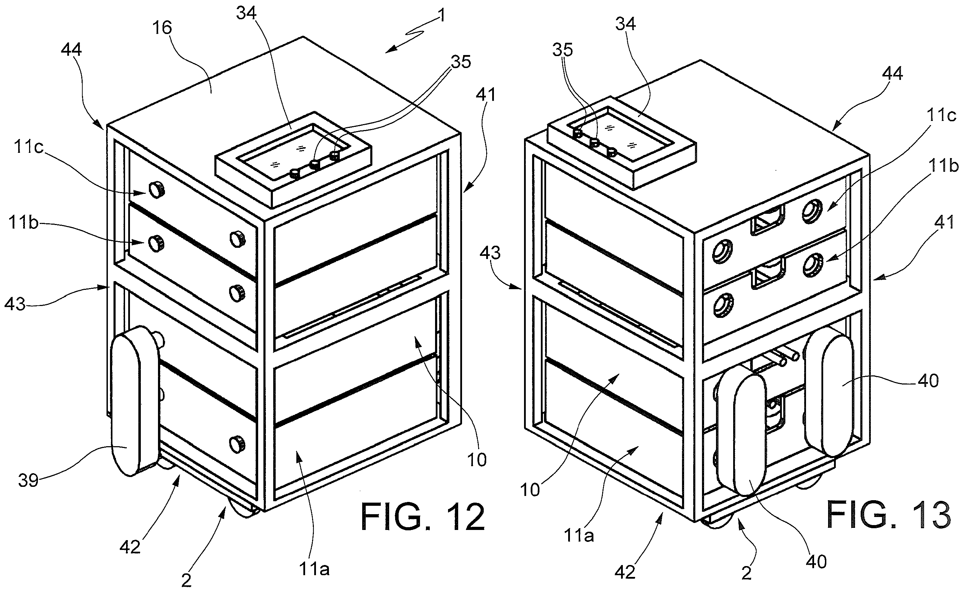

Another embodiment of machine 1 according to the invention is shown in figures 12-16.

This embodiment of the invention differs from the previous embodiment (figures 8-11) for the fact that machine 1 comprises a plurality of interchangeable functional modules 11a,11b,11c, selectively removably coupled to main module 10.

In other words, machine 1 comprises one or more functional modules 11a,11b,11c which are operative in a certain phase, and therefore located directly near floor P; machine 1 also comprises one or more further functional modules 11a,11b,11c which are inoperative in the same phase, and are therefore stored in another part of the machine, ready for use.

Each of said functional modules 11a,11b,11c is suitable to perform a respective distinct washing and/or cleaning treatment and/or the like on floor P.

Merely by way of non-limiting example, machine 1 can comprise a first washing functional module 1 1a of floor P, a second sweeping functional module 11b of floor P and a third waxing/dewaxing functional module 11c for floor P.

Additional modules 11a,11b,11c of different types can also be provided to carry out other operations/treatments.

In other words, according to this solution machine 1 comprises, and is already equipped with, functional modules 11a,11b,11c needed to carry out the main (and most common) cleaning/treatment operations of floor P.

As mentioned, functional module 11a operating within a certain phase is located directly near floor P, while inoperative functional modules 11b,11c are located in positions above, in use.

The presence of an operator is therefore only necessary to move functional modules 11a,11b,11c from an operative position to an inoperative position and vice versa. Machine 1 comprises a frame 41 for this purpose, which is suitable to support main module 10 and functional modules 11a,11b,11c.

More specifically, frame 41 comprises a base 42, an intermediate portion 43 and an upper portion 44.

Base 42 houses operative functional module 11a in a certain phase, while intermediate portion 43 houses main module 10; in the same phase, inoperative functional modules 11b,11c - interchangeable with the operating module - are instead housed/stored in upper portion 44 of frame 41.

The mechanical coupling between main module 10 and operative functional module 11a is obtained with the same modes described in relation to the embodiment of figures 8-11 (i.e. with first transmission members 39 and second transmission members 40), since main module 10 is directly superimposed over operative functional module 11a.

In practice, therefore, upper portion 44 of frame 41 acts as a storage area for inoperative functional modules 11b,11c at a certain moment.

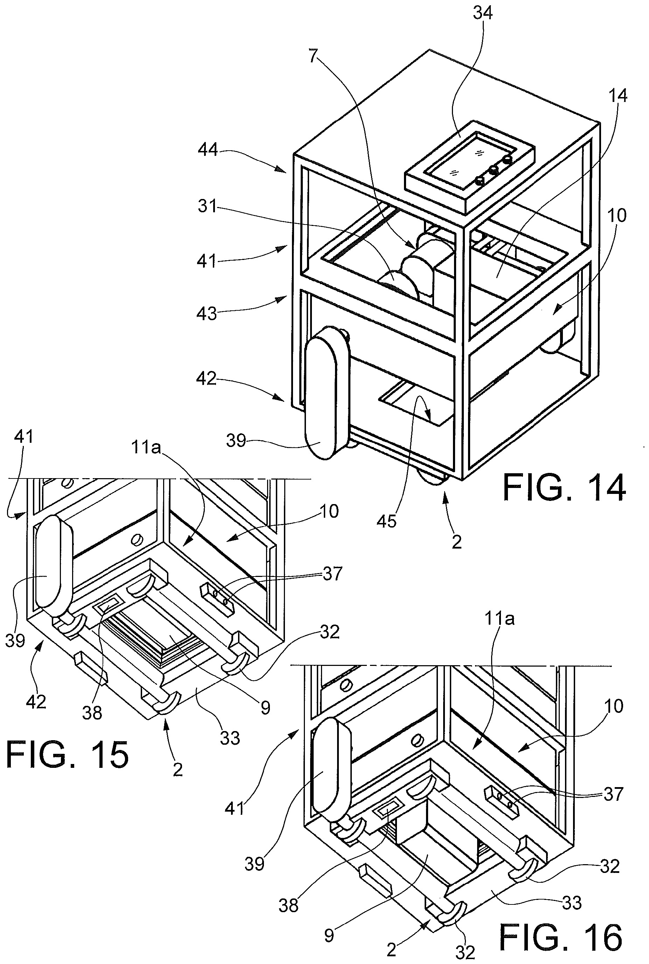

Figure 14 shows frame 41 of machine 1 with all functional modules 11a,11b,11c removed.

For practical purposes and/or constructive simplicity, frame 41 can be made integral with main module 10 (which must be permanently installed in machine 1), while only functional modules 11a,11b,11c are removable.

The shape and dimensions of frame 41 can be of any type, for example in relation to the number of functional modules 11a,11b,11c that will be kept and used in machine 1.

Frame 41 comprises, at base 42, a window 45 for the passage of operating head 9 of operative functional module 11a within a certain phase.

Figures 15,16 show a schematic view from below of machine 1, respectively with operating head 9 of operative functional module 11a in a raised inoperative position (for example to carry out maintenance operations, or for the replacement of cleaning member 5) or in the lowered operative position (for the sake of simplicity cleaning member 5 is not shown in figure 16).

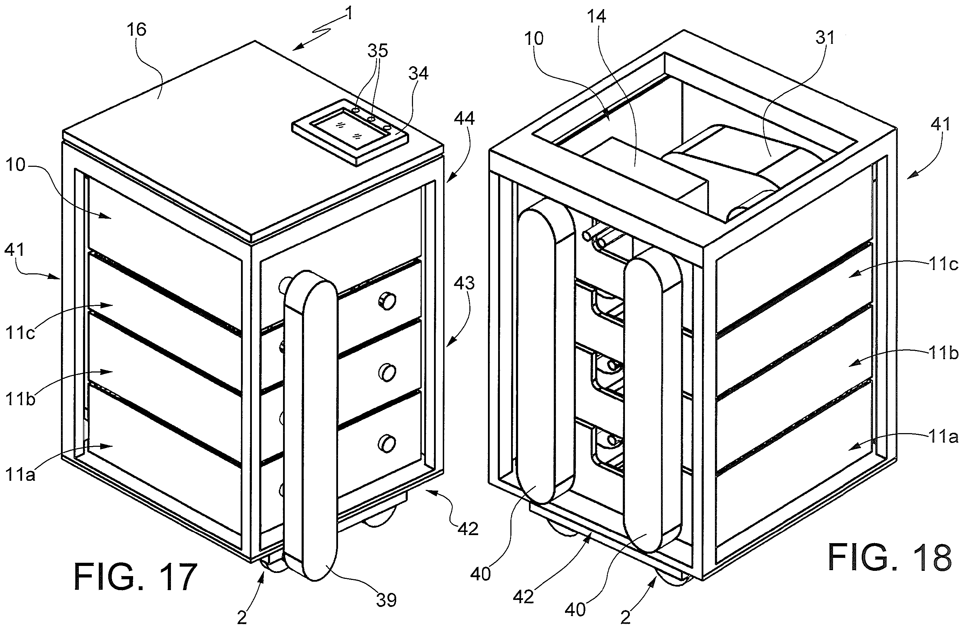

Proximity sensors 37 and detection sensors 38 can be fixed to base 42 of frame 41. Another embodiment of machine 1 according to the invention is shown in figures 17-21.

This embodiment essentially differs from that of figures 12-16 in the allocation of the various modules 10,11a,11b,11c in frame 41.

In more detail, in this case main module 10 is provided at upper portion 44, operative functional module 11a is envisaged at base 42, while inoperative functional modules 11b,11c, which are interchangeable with the operating module, are provided at intermediate portion 43 of frame 41.

One of the advantages of this configuration with respect to the previously described one is that all functional modules 11a,11b,11c are directly stacked above one another; this can eventually make it possible to provide guides (not shown in the figures) along the uprights 46 of frame 41, which are adapted to allow the automatic lowering of functional modules 11a,11b,11c following the removal of the module in the operative position.

Therefore, in this case, the operator that must replace module 11a in the operative position, simply removes it simply by sliding it sideways, and the module directly above spontaneously descends and is already in the operative position.

This configuration can be advantageous when a full treatment/cleaning program must be carried out on floor P, as the various functional modules 11a,11b,11c are always used in accordance with a predetermined sequence (for example following the order sweeping, washing, waxing or the like).

Also in this case, for practical purposes and/or constructive simplicity, main module 10 can be integral with frame 41.

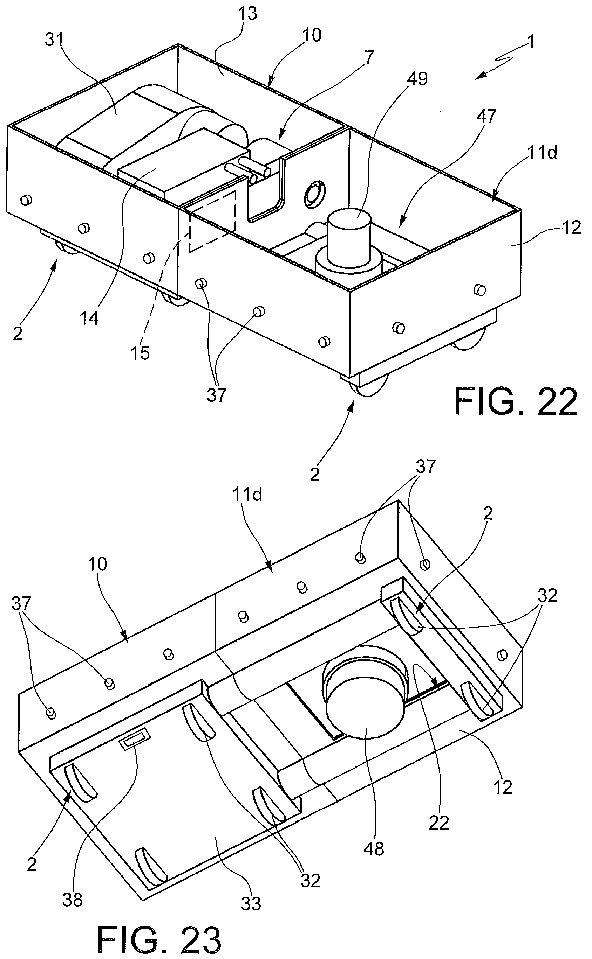

Another embodiment of machine 1 according to the invention is shown in figures 22,23.

In this embodiment, machine 1 comprises a polishing functional module 11d of floor P.

Polishing functional module 1 1d is interchangeable with all other (if any) functional modules 11a,11b,11c provided in machine 1.

In other words, all the embodiments of machine 1 as described above can comprise a polishing functional module 11d together with or instead of the others.

Merely by way of non-limiting example, figures 22,23 show an embodiment of machine 1 comprising main module 10 and said polishing functional module 11d, mutually coupled in a side-by-side configuration, having minimum vertical dimensions; the necessary electrical/electronic connections 15 are provided between the two modules 10,11d.

Polishing functional module 11d comprises support 12, to which a polishing operator group 47 is fixed.

Polishing operator group 47 comprises a polishing disk 48 coupled to a respective gearmotor 49, or other equivalent drive unit.

Polishing disk 48 protrudes below support 12 and exits through provided opening 22.

Gearmotor 49 can be housed inside support 12 of functional module 11d; alternatively, polishing disk 48 can be driven by suitable means provided inside box-like structure 13 of main module 10.

In one embodiment of the invention, polishing disk 48 could also be driven by the same winding motor 27 already equipped inside main module 10, providing appropriate motion transmission means.

It should be noted that all previously described functional modules 11a-11d can be equipped with additional operator groups of another type, for example comprising brushes, rollers or the like, possibly also of a well-known type in the field of cleaning machines.

Moreover, machine 1 can be equipped with additional functional groups needed to carry out certain specific operations, possibly of a well-known type in the field. For example, machine 1 can comprise aspiration means which facilitate the collection of larger dirt.

It has thus been seen how the invention achieves the intended purposes.

Firstly, thanks to the particular solution adopted for creating operator group 4, machine 1 makes it possible to completely eliminate the need to dispose of waste fluids containing polluting substances.

In fact, the dirt of floor P is entirely collected by cleaning member 5, which in turn is wound around second reel 8; therefore, there are no longer residual and harmful substances that must be collected from floor P and subsequently disposed of in an appropriate manner.

In addition to the complete elimination of any liquid to dispose of, better and more precise dosage of treatment liquids used to impregnate/soak cleaning member 5 offers considerable savings in terms of products used (which are also potentially harmful to the environment).

Another important result achieved is the considerable reduction of the need for an operator present during the operation of machine 1.

In fact, machine 1 can move autonomously within the environment to be treated along a given path and can be programmed to carry out different operating cycles in relation to the characteristics of floor P and its condition.

For example, all that is needed is the provision of a graphic file containing the layout of the environment to be able to immediately generate a specific and customised operative treatment program.

This result is all the more evident and advantageous in consideration of the fact that the modular configuration and structure of machine 1 makes it possible to obtain highly versatile operation, with the immediate possibility to switch from one type of operation to another.

In particular, the fact that all necessary functional modules 11a,11b,11c are already on board the machine makes switching from one type of operation to another very rapid, in addition to requiring less intervention by an operator.

Machine 1 can have considerable autonomy both from an energy and materials/products used perspective, as it can treat floors P of large dimensions without requiring any interruptions or operators' interventions.

Machine 1 can be used in any environment, with particular preference to environments of medium-large size.

For example, it can be used to clean offices, warehouses, airports, stations, hospitals and more.

Machine 1 can be widely customised, i.e. created in several specific versions for specific applications or treatments: its modular structure precisely allows this utmost freedom for the user in the preparation of the specific versions.

Various modifications and variations can be made in the invention this conceived, without departing from the scope of the invention.

Moreover, all the elements can be replaced with other technically equivalent elements. In practice, the materials used as well as the contingent shapes and dimensions can vary greatly according to needs, without thereby departing from the scope of protection of the following claims.

## Claims

1. Floor cleaning machine (1), comprising locomotion means (2) for moving on the floor (P), at least one processing and control unit (3) operatively interlocked with said locomotion means (2), and at least one operator group (4) suitable to carry out a washing treatment, and/or cleaning treatment and/or the like on the floor (P) itself, said operator group (4) comprising at least one cleaning member (5) in form of a band wound in a first reel (6), winding means (7) for winding said cleaning member (5), unwound from said first reel (6), in a second reel (8), and an operating head (9) suitable to hold a portion (5a) of said cleaning member (5), interposed between said first reel (6) and said second reel (8), in contact with the floor (P), said processing and control unit (3) comprising automatic driving means (36) operatively interlocked with said locomotion means (2), **characterized in that** said operating head (9) holds said portion (5a) in contact with floor (P) by exerting a certain amount of pressure which can vary in relation to the different types of floor (P) itself.

2. Machine according to claim 1, wherein said automatic driving means (36) comprise means for reading a map of the environment to be cleaned/treated, and means for generating a path within the same environment.

3. Machine according to claim 2, wherein said map of the environment to be cleaned/treated is in the form of a graphic file loaded in the memory of said processing and control unit (3).

4. Machine according to one of claims 1-3, wherein said automatic driving means (36) comprise a plurality of proximity sensors (37), for the detection of obstacles in said environment.

5. Machine according to one of the previous claims, wherein said operator group (4) comprises dispensing means (17) of a predetermined quantity of a treatment liquid on said cleaning member (5), said liquid being suitable to carry out a washing treatment, and/or disinfection/sanification treatment, and/or waxing, and/or the like, on the floor (P).

6. Machine according to claim 5, wherein said cleaning member (5) comprises a cloth previously impregnated with a treatment liquid suitable to carry out a washing treatment, and/or disinfection/sanification treatment, and/or waxing, and/or the like, on the floor (P).

7. Machine according to one of the preceding claims, comprising a main module (10) which comprises at least said locomotion means (2) and said processing and control unit (3), and at least one functional module (11a,11b,11c) which comprises at least one part of said operator group (4), said functional module (11a,11b,11c) being separatable from said main module (10) and possibly interchangeable with other functional modules (11a,11b,11c).

8. Machine according to claim 7, wherein said functional module (11a,11b,11c) comprises a respective support (12) which houses at least said first reel (6), said second reel (8) and said operating head (9), said main module (10) comprising a respective box-like structure (13) which houses at least said locomotion means (2), said processing and control unit (3) and said winding means (7), said support (12) and said box-like structure (13) being mutually couplable in a removable manner.

9. Machine according to claim 8, wherein said main module (10) and said functional module (11a,11b,11c) are arranged side-by-side each other in a configuration of minimum bulk, in vertical sense during use.

10. Machine according to claim 8, wherein said box-like structure (13) is superimposed on said support (12) and wherein said locomotion means (2) comprise a drive unit (31) contained in said box-like structure (13) and wheels (32), some of which steering, removably fixed below said support (12), first transmission members (39) being provided for transmitting the motion from said drive unit (31) to said wheels (32), and second transmission members (40) being provided for transmitting the motion from said winding means (7) at least to said second reel holder (26).

11. Machine according to one of claims 7-10, comprising a plurality of functional modules (11a,11b,11c), interchangeable and selectively couplable in a removable manner with said main module (10), each of said functional modules (11a,11b,11c) being suitable to carry out a respective distinct washing treatment, and/or cleaning treatment and/or the like on the floor (P), said machine comprising at least one first washing functional module (11a) for washing the floor (P), a second sweeping functional module (11b) for sweeping the floor (P) and a third waxing/dewaxing functional module (11c) for waxing/dewaxing the floor (P).

12. Machine according to claim 11, comprising a frame (41) suitable to support said main module (10) and said plurality of functional modules (11a,11b,11c), said frame (41) comprising a base (42), an intermediate portion (43) and an upper portion (44), said base (42) housing said operative functional module (11a,11b,11c), said intermediate portion (43) or said upper portion (44) housing said main module (10), and respectively said upper portion (44) or said intermediate portion (43) housing, superimposed on each other, one or more inactive functional modules (11a,11b,11c) that are interchangeable with said operative functional module (11a,11b,11c).

13. Machine according to one of the claims 7-12, comprising a polishing functional module (11d), selectively couplable with said main module (10) in a removable and interchangeable manner with respect to said functional modules (11a,11b,11c), provided with a respective lower polishing disk (48).

14. Machine according to one of the preceding claims, comprising at least a sensor (38) for detecting the characteristics of the floor (P) to be treated.

15. Machine according to claim 1, wherein said operating head (9) can be heated in order to render certain operations easier or more effective.

## Patentansprüche

1. Bodenreinigungsmaschine (1), umfassend Fortbewegungsmittel (2) zur Fortbewegung auf dem Boden (P), mindestens eine Verarbeitungs- und Steuereinheit (3), die mit den besagten Fortbewegungsmitteln (2) funktionell verriegelt ist, und mindestens ein Arbeitsaggregat (4), das geeignet ist, eine Waschbehandlung und/oder Reinigungsbehandlung und/oder dergleichen auf dem Boden (P) durchzuführen, wobei besagtes Arbeitsaggregat (4) umfassend mindestens ein Reinigungselement (5) in Form eines auf eine erste Rolle (6) gewickelten Bandes, Wickelmittel (7) zum Aufwickeln des von der besagten ersten Rolle (6) abgewickelten besagten Reinigungselements (5) auf eine zweite Rolle (8) und einen Arbeitskopf (9), der geeignet ist, einen Abschnitt (5a) des besagten Reinigungselements (5), der zwischen der besagten ersten Rolle (6) und der besagten zweiten Rolle (8) angeordnet ist, in Kontakt mit dem Boden (P) zu halten, wobei besagte Verarbeitungs- und Steuereinheit (3), umfassend automatische Antriebsmittel (36), die mit den Fortbewegungsmitteln (2) funktionell verriegelt sind, **dadurch gekennzeichnet ist, dass** besagter Arbeitskopf (9) den besagten Abschnitt (5a) in Kontakt mit dem Boden (P) hält, indem er einen bestimmten Druck ausübt, der in Abhängigkeit der verschiedenen Bodenarten (P) variieren kann.

2. Maschine nach Anspruch 1, worin besagte automatische Antriebsmittel (36) Mittel zum Lesen einer Karte der zu reinigenden/behandelnden Umgebung und Mittel zum Erstellen einer Strecke innerhalb derselben Umgebung umfassen.

3. Maschine nach Anspruch 2, worin besagte Karte der zu reinigenden/behandelnden Umgebung in Form einer Grafikdatei vorliegt, die in den Speicher der Verarbeitungs- und Steuereinheit (3) geladen wird.

4. Maschine nach einem der Ansprüche 1 bis 3, worin die besagten automatischen Antriebsmittel (36) eine Vielzahl von Näherungssensoren (37) zur Erfassung von Hindernissen in besagter Umgebung umfassen.

5. Maschine nach einem der vorhergehenden Ansprüche, worin das besagte Arbeitsaggregat(4) Spendermittel (17) für eine vorgegebene Menge einer Behandlungsflüssigkeit auf das besagte Reinigungselement (5) umfasst, wobei die besagte Flüssigkeit geeignet ist, eine Waschbehandlung und/oder eine Desinfektions-/Sanierungsbehandlung, und/oder Wachsbehandlung und/oder dergleichen auf dem Boden (P) durchzuführen.

6. Maschine nach Anspruch 5, worin das besagte Reinigungselement (5) ein Tuch umfasst, das zuvor mit einer Behandlungsflüssigkeit imprägniert wurde, die geeignet ist, eine Waschbehandlung und/oder eine Desinfektions-/Sanierungsbehandlung, und/oder Wachsbehandlung und/oder dergleichen auf dem Boden (P) durchzuführen.

7. Maschine nach einem der vorhergehenden Ansprüche, umfassend ein Hauptmodul (10), das mindestens die besagten Fortbewegungsmittel (2) und die besagte Verarbeitungs- und Steuereinheit (3) umfasst, und mindestens ein Funktionsmodul (lla, llb, llc), das zumindest einen Teil des besagten Arbeitsaggregats (4) umfasst, wobei das besagte Funktionsmodul (lla, llb, llc) von dem besagten Hauptmodul (10) trennbar und möglicherweise mit anderen Funktionsmodulen (lla, llb, llc) austauschbar ist.

8. Maschine nach Anspruch 7, worin das besagte Funktionsmodul (lla, 11b, 11c) einen entsprechenden Träger (12) umfasst, der mindestens die besagte erste Rolle (6), die besagte zweite Rolle (8) und den besagten Arbeitskopf (9) aufnimmt, wobei das Hauptmodul (10) eine entsprechende kastenartige Struktur (13) umfasst, die mindestens die besagten Fortbewegungsmittel (2), die besagte Verarbeitungs- und Steuereinheit (3) und die besagten Wickelmittel (7) aufnimmt, wobei der besagte Träger (12) und die besagte kastenartige Struktur (13) auf lösbare Weise miteinander verbunden werden können.

9. Maschine nach Anspruch 8, worin das besagte Hauptmodul (10) und das Funktionsmodul (11a, 11b, 11c) während der Verwendung nebeneinander und in einer Konfiguration mit minimalem Platzbedarf vertikal angeordnet sind.

10. Maschine nach Anspruch 8, worin die besagte kastenartige Struktur (13) auf dem besagten Träger (12) aufgesetzt ist und die besagten Fortbewegungsmittel (2) eine Antriebseinheit (31), die in der besagten kastenartigen Struktur (13) enthalten ist, und unter dem Träger (12) abnehmbar befestigte Räder (32), von denen einige lenkbar sind, umfassen, wobei erste Übertragungselemente (39) vorgesehen sind, um die Bewegung von der besagten Antriebseinheit (31) auf die besagten Räder (32) zu übertragen, und zweite Übertragungselemente (40) vorgesehen sind, um die Bewegung von den besagten Wickelmitteln (7) zumindest an den besagten zweiten Rollenhalter (26)zu übertragen.

11. Maschine nach einem der Ansprüche 7 bis 10, umfassend eine Vielzahl von Funktionsmodulen (lla, llb, llc), die austauschbar und selektiv in einer abnehmbaren Weise mit besagtem Hauptmodul (10) koppelbar sind, wobei jedes der Funktionsmodule (lla, llb, llc) geeignet ist, eine bestimmte Waschbehandlung, und/oder Reinigungsbehandlung und/oder dergleichen auf dem Boden (P) durchzuführen, wobei die Maschine mindestens ein erstes Waschfunktionsmodul (11a) zum Waschen des Bodens (P) und ein zweites Kehrfunktionsmodul (11b) zum Kehren des Bodens und ein drittes Wachsfunktions- und Entwachsfunktionsmodul (11c) zum Wachsen/Entwachsen des Bodens (P) umfasst.

12. Maschine nach Anspruch 11, umfassend einen Rahmen (41), der dazu dient, das besagte Hauptmodul (10) und die Vielzahl von Funktionsmodulen (11a, 11b, 11c) zu tragen, wobei der Rahmen eine Basis (42), einen Zwischenabschnitt (43) und einen oberen Abschnitt (44) umfasst, wobei die besagte Basis (42) das besagte operative Funktionsmodul (lla, 11b, 11c) aufnimmt, wobei der besagte obere Abschnitt (44) oder der besagte Zwischenabschnitt (43) das besagte Hauptmodul (10) aufnimmt, und wobei der besagte obere Abschnitt (44) bzw. der besagte Zwischenabschnitt (43), ein oder mehrere inaktive Funktionsmodule (lla, llb, llc) aufnimmt, die übereinander liegen, und die mit dem besagten operativen Funktionsmodul (11a, 11b, 11c) austauschbar sind.

13. Maschine nach einem der Ansprüche 7 bis 12, umfassend ein Polierfunktionsmodul (l1d), das selektiv mit dem Hauptmodul in einer abnehmbaren und austauschbaren Weise in Bezug auf die besagten Funktionsmodule (lla, llb, llc) koppelbar ist, und mit einer entsprechenden unteren Polierscheibe (48) versehen ist.

14. Maschine nach einem der vorhergehenden Ansprüche, umfassend mindestens einen Sensor (38) zur Erfassung der Eigenschaften des zu behandelnden Bodens (P).

15. Maschine nach Anspruch 1, worin der besagte Arbeitskopf (9) beheizt werden kann, um bestimmte Arbeitsgänge zu erleichtern oder effektiver zu gestalten.

## Revendications

1. Machine de nettoyage de sol (1), comprenant des moyens de locomotion (2) pour se déplacer sur le sol (P), au moins une unité de traitement et de commande (3) verrouillée opérationnellement avec lesdits moyens de locomotion (2), et au moins un groupe d'opérateur (4) adapté pour réaliser un traitement de lavage, et/ou traitement de nettoyage et/ou analogue sur le sol (P), ledit groupe d'opérateur (4) comprenant au moins un élément de nettoyage (5) sous forme de bande enroulée dans une première bobine (6), des moyens d'enroulement (7) pour enrouler ledit élément de nettoyage (5), déroulé de ladite première bobine (6), dans une deuxième bobine (8), et une tête d'actionnement (9) adaptée pour maintenir une partie (5a) dudit élément de nettoyage (5), intercalée entre ladite première bobine (6) et ladite deuxième bobine (8), en contact avec le sol (P), ladite unité de traitement et de commande (3) comprenant des moyens d'entraînement automatiques (36) verrouillés opérationnellement avec lesdits moyens de locomotion (2), **caractérisé en ce que** ladite tête d'actionnement (9) maintient ladite partie (5a) en contact avec le sol (P) en exerçant une certaine pression qui peut varier en fonction des différents types de sol (P).

2. Machine selon la revendication 1, dans laquelle lesdits moyens d'entraînement automatiques (36) comprennent des moyens pour lire une carte de l'environnement qui doit être nettoyé/traité, et des moyens pour générer un trajet dans le même environnement.

3. Machine selon la revendication 2, dans laquelle ladite carte de l'environnement qui doit être nettoyé/traité a la forme d'un fichier graphique chargé dans la mémoire de ladite unité de traitement et de commande (3).

4. Machine selon l'une des revendications 1 à 3, dans laquelle lesdits moyens d'entraînement automatiques (36) comprennent une pluralité de capteurs de proximité (37), pour la détection d'obstacles dans ledit environnement.

5. Machine selon l'une des revendications précédentes, dans laquelle ledit groupe d'opérateur (4) comprend des moyens de distribution (17) d'une quantité prédéterminée d'un liquide de traitement sur ledit élément de nettoyage (5), ledit liquide étant adapté pour réaliser un traitement de lavage, et/ou de désinfection/assainissement, et/ou de cirage, et/ou analogue, sur le sol (P).

6. Machine selon la revendication 5, dans laquelle ledit élément de nettoyage (5) comprend un chiffon précédemment imprégné d'un liquide de traitement adapté pour réaliser un traitement de lavage, et/ou de désinfection/assainissement, et/ou de cirage, et/ou analogue, sur le sol (P).

7. Machine selon l'une des revendications précédentes, comprenant un module principal (10) qui comprend au moins lesdits moyens de locomotion (2) et ladite unité de traitement et de commande (3), et au moins un module fonctionnel (11a, 11b, 11c) qui comprend au moins une partie dudit groupe d'opérateur (4), ledit module fonctionnel (11a, 11b, 11c) étant séparable dudit module principal (10) et éventuellement interchangeable avec d'autres modules fonctionnels (11a, 11b, 11c).

8. Machine selon la revendication 7, dans laquelle ledit module fonctionnel (11a, 11b, 11c) comprend un support (12) respectif qui contient au moins ladite première bobine (6), ladite deuxième bobine (8) et ladite tête d'actionnement (9), ledit module principal (10) comprenant une structure en forme de boîte (13) respective qui contient au moins lesdits moyens de locomotion (2), ladite unité de traitement et de commande (3) et lesdits moyens d'enroulement (7), ledit support (12) et ladite structure en forme de boîte (13) pouvant être couplés mutuellement de manière amovible.

9. Machine selon la revendication 8, dans laquelle ledit module principal (10) et ledit module fonctionnel (11a, 11b, 11c) sont disposés côte à côte dans une configuration de masse minimale, dans le sens vertical pendant l'utilisation.

10. Machine selon la revendication 8, dans laquelle ladite structure en forme de boîte (13) est superposée sur ledit support (12) et dans laquelle lesdits moyens de locomotion (2) comprennent une unité d'entraînement (31) contenue dans ladite structure en forme de boîte (13) et des roues (32), certaines de direction, fixées de manière amovible en dessous dudit support (12), des premiers éléments de transmission (39) étant prévus pour transmettre le mouvement de ladite unité d'entraînement (31) auxdites roues (32), et des deuxièmes éléments de transmission (40) étant prévus pour transmettre le mouvement desdits moyens d'enroulement (7) au moins audit support de la deuxième bobine (26).

11. Machine selon l'une des revendications 7 à 10, comprenant une pluralité de modules fonctionnels (11a, 11b, 11c), interchangeable et couplable sélectivement de manière amovible avec ledit module principal (10), chacun desdits modules fonctionnels (11a, 11b, 11c) étant adapté pour réaliser un traitement de lavage, et/ou traitement de nettoyage et/ou analogue distincts respectifs sur le sol (P), ladite machine comprenant au moins un premier module fonctionnel de lavage (11a) pour laver le sol (P), un deuxième module fonctionnel de balayage (11b) pour balayer le sol (P) et un troisième module fonctionnel de cirage/décirage (11c) pour cirer/décirer le sol (P).

12. Machine selon la revendication 11, comprenant un bâti (41) adapté pour supporter ledit module principal (10) et ladite pluralité de modules fonctionnels (11a, 11b, 11c), ledit bâti (41) comprenant une base (42), une partie intermédiaire (43) et une partie supérieure (44), ladite base (42) contenant ledit module fonctionnel (11a, 11b, 11c) opérationnel, ladite partie intermédiaire (43) ou ladite partie supérieure (44) contenant ledit module principal (10), et respectivement ladite partie supérieure (44) ou ladite partie intermédiaire (43) contenant, superposés l'un sur l'autre, un ou plusieurs module fonctionnels (11a, 11b, 11c) inactifs interchangeables avec ledit module fonctionnel (11a, 11b, 11c) opérationnel.

13. Machine selon l'une des revendications 7 à 12, comprenant un module fonctionnel de polissage (11d), couplable sélectivement avec ledit module principal (10) de manière amovible et interchangeable par rapport auxdits modules fonctionnels (11a, 11b, 11c), doté d'un disque de polissage inférieur (48) respectif.

14. Machine selon l'une des revendications précédentes, comprenant au moins un capteur (38) pour détecter les caractéristiques du sol (P) qui doit être traité.

15. Machine selon la revendication 1, dans laquelle ladite tête d'actionnement (9) peut être chauffée afin de rendre certaines opérations plus faciles ou plus efficaces.
